# EUROPEAN PATENT APPLICATION

(11) **EP 4 814 532 A1**
(43) Date of publication of application: **30.09.2026**
(21) Application number: 24894024.9
(22) Date of filing: 08.11.2024
(51) Int. Cl.: G01S 7/40, G01S 13/58

(54) **ELECTRONIC DEVICE, METHOD FOR CONTROLLING ELECTRONIC DEVICE, AND PROGRAM**

(30) Priority: 24.11.2023 JP 2023199461
(71) Applicant: Kyocera Corporation, Kyoto-shi, Kyoto 612-8501 (JP)
(72) Inventor: KURODA Jun, Kyoto-shi, Kyoto 612-8501 (JP); MATSUE Yudai, Kyoto-shi, Kyoto 612-8501 (JP); KASHIMA Yuu, Kyoto-shi, Kyoto 612-8501 (JP)
(74) Representative: Viering, Jentschura & Partner mbB Patent- und Rechtsanwälte
(86) International application number: PCT/JP2024/039885
(87) International publication number: WO 2025/110032

(57) **Abstract**

A method of controlling an electronic device is provided. The electronic device is configured to measure vibration of a target on the basis of an electromagnetic wave reflected from the target by using calibration information stored in a calibration coefficient memory. The method includes a calibrating step for calibrating a measurement result from the electronic device on the basis of a result obtained by measuring vibration of a reference vibrating body.

## Description

### CROSS-REFERENCE TO RELATED APPLICATIONS

This application claims priority based on Japanese Patent Application No. 2023-199461 filed November 24, 2023, the entire disclosure of which is hereby incorporated by reference.

### TECHNICAL FIELD

The present disclosure relates to an electronic device, a method of controlling an electronic device, and a program.

### BACKGROUND OF INVENTION

In fields such as the automotive and related industries, for example, technologies for measuring values such as the distance between a vehicle and a given object are gaining importance. In particular, recent years have seen various research into radio detection and ranging (RADAR) technology, which measures values such as the distance to an obstacle or other object by transmitting radio waves, such as millimeter waves, and receiving reflected waves back from the object. The importance of technologies for measuring such distances and the like is expected to increase further with the development of technologies for assisting drivers with driving and technologies related to self-driving, in which driving is partially or fully automated. Various technologies have been proposed to detect objects through the transmission and reception of radio waves such as millimeter waves. For example, Patent Literature 1 proposes a technology that can improve the detection precision of a detection target in a space where electromagnetic wave reflections exist.

Another technology has been proposed (for example, Patent Literature 2) to acquire information pertaining to vibration at the position of a specific vibration source by using radar technology like the above-described.

### CITATION LIST

### PATENT LITERATURE

Patent Literature 1: Japanese Unexamined Patent Application Publication No. 2021-196195
Patent Literature 2: Japanese Unexamined Patent Application Publication No. 2023-108329

### SUMMARY

In an embodiment, a method of controlling an electronic device is provided. The electronic device is configured to measure vibration of a target on the basis of an electromagnetic wave reflected from the target by using calibration information stored in a storage unit. The method includes a calibrating step for calibrating a measurement result from the electronic device on the basis of a result obtained by measuring vibration of a reference vibrating body.

In an embodiment, a program is provided. The program causes an electronic device to execute a process. The electronic device is configured to measure vibration of a target on the basis of an electromagnetic wave reflected from the target by using calibration information stored in a storage unit. The process includes a calibrating step for calibrating a measurement result from the electronic device on the basis of a result obtained by measuring vibration of a reference vibrating body.

In an embodiment, an electronic device is provided. The electronic device includes a signal processing unit configured to measure vibration of a target on the basis of an electromagnetic wave reflected from the target by using calibration information stored in a storage unit. The electronic device includes a correction processing unit configured to calibrate a measurement result from the electronic device on the basis of a result obtained by measuring vibration of a reference vibrating body.

### BRIEF DESCRIPTION OF THE DRAWINGS

FIG. 1 is a diagram for describing how an electronic device according to an embodiment is used.
FIG. 2 is a function block diagram schematically illustrating a configuration of an electronic device according to an embodiment.
FIG. 3 is a diagram for describing the composition of a signal processed by an electronic device according to an embodiment.
FIG. 4 is a diagram for describing the processing of a signal by an electronic device according to an embodiment.
FIG. 5 is a diagram for describing the processing of a signal by an electronic device according to an embodiment.
FIG. 6 is a diagram for describing the processing of a signal by an electronic device according to an embodiment.
FIG. 7 schematically illustrates an example of the antenna arrangement and the operating principle of an antenna array of an electronic device according to an embodiment.
FIG. 8 illustrates an example of the antenna arrangement in an antenna array of an electronic device according to an embodiment.
FIG. 9 illustrates an example of a result of vibrating body detection by an electronic device according to an embodiment.
FIG. 10 schematically illustrates a form of vibration detection by an electronic device according to an embodiment.
FIG. 11A is a graph illustrating an example of a result of vibration detection by a radar sensor.
FIG. 11B is a graph illustrating an example of a result of vibration detection by a laser Doppler vibrometer.
FIG. 12 is a graph illustrating an example of a result of calculation by the finite element method according to an embodiment.
FIG. 13 illustrates an example of a relation between a reference vibrating body and an FOV by an electronic device according to an embodiment.
FIG. 14 is a flowchart for describing the generation of data on average vibration displacement of a reference vibrating body.
FIG. 15 is a flowchart for describing operations by an electronic device according to an embodiment.
FIG. 16 illustrates an example of a result of processing according to an embodiment.
FIG. 17 illustrates an example of a vibrating body according to another embodiment.
FIG. 18 illustrates an example of vibration displacement of a vibrating body according to another embodiment.

### DESCRIPTION OF EMBODIMENTS

The ability to detect, with good precision, vibration of a vibrating body by transmitting and receiving waves, such as millimeter waves for example, could be useful in a wide variety of fields. An objective of the present disclosure is to provide an electronic device, a method of controlling an electronic device, and a program with which vibration of a vibrating body can be detected with good precision by transmitting and receiving waves. According to an embodiment, it is possible to provide an electronic device, a method of controlling an electronic device, and a program with which vibration of a vibrating body can be detected with good precision by transmitting and receiving waves. The following describes an embodiment with reference to the drawings.

In the present disclosure, an "electronic device" may be a device driven by electric power. A "user" may be an entity (typically a human being) or an animal that uses an electronic device according to an embodiment and/or a system including the electronic device. The user may include an entity that detects vibration of a human body or other living thing, any of various types of objects, or the like by using an electronic device according to an embodiment. The "target" may be an entity or thing (subject of monitoring, such as a human being or other living thing, or any of various types of objects, for example) to be monitored using an electronic device according to an embodiment. The user may also include the target. The "target" in the present disclosure may include, for example, an automobile, an automobile engine, a motor, a motorcycle, a ship, an office building, condominium, or other structure, a bridge, a road, a highway, a structure under construction, a tunnel, a machine tool, and an excavator.

An electronic device according to an embodiment can detect the heartbeat of a human being or other subject present in the surroundings of the electronic device. Accordingly, anticipated situations in which an electronic device according to an embodiment is used may be, for example, specific facilities or the like used by people engaged in social activities, such as companies, hospitals, nursing homes, schools, sports gyms, and nursing care facilities. For example, it is extremely important for a company to grasp and/or manage the health status of its employees and the like. Similarly, it is extremely important for a hospital to grasp and/or manage the health status of its patients, medical personnel, and the like, and for a nursing home to grasp and/or manage the health status of its residents, staff, and the like. The situations in which an electronic device according to an embodiment is used are not limited to facilities such as companies, hospitals, and nursing homes as described above, and may be any given facility where it is desirable to grasp and/or manage the health status of a subject. The any given facility may also include a non-commercial facility, such as the home of a user. The situations in which an electronic device according to an embodiment is used are not limited to indoors and may also be outdoors. For example, the situations in which an electronic device according to an embodiment is used may also be inside means of transportation such as trains, buses, airplanes, and the like, as well as stations, boarding areas, and the like. The situations in which an electronic device according to an embodiment is used may also be a means of transportation such as an automobile, aircraft, or ship, a hotel, the home of a user, or the living room, bath, toilet, bedroom, or the like in a home. The situations in which an electronic device according to an embodiment is used may also be when measuring the heartbeats of animals such as cows, pigs, or other livestock at zoos, ranches, farms, and the like.

In a nursing facility, for example, an electronic device according to an embodiment may be used for the purpose of detecting or monitoring the heartbeat of a subject such as a person in need of nursing or care. If an abnormality is found in the heartbeat of a subject such as a person in need of nursing or care, for example, an electronic device according to an embodiment may also issue a predetermined warning to the person in question and/or another person. Consequently, according to an electronic device according to an embodiment, the person in question and/or a staff member of a nursing care facility or the like may recognize that an abnormality is found in the pulse of a subject such as a person in need of nursing or care, for example. On the other hand, if an abnormality is not found (for example, the heartbeat is found to be normal) in the heartbeat of a subject such as a person in need of nursing or care, for example, an electronic device according to an embodiment may also issue a notification to that effect to the person in question and/or another person. Consequently, according to an electronic device according to an embodiment, the person in question and/or a staff member of a nursing care facility or the like may recognize that the pulse is normal for a subject such as a person in need of nursing or care, for example. An electronic device according to an embodiment may also use the heartbeat of a subject of monitoring to estimate the heartbeat interval (the RR interval (RRI) in an electrocardiogram), detection of distracted driving such as falling asleep at the wheel, and predictive signs thereof, estimation of level of alertness, estimation of level of fatigue, or identification of the subject of monitoring.

An electronic device according to an embodiment may also detect the pulse of an animal other than a human being as the subject. As an example, the electronic device according to an embodiment described hereinafter is described as detecting vibration of a speaker (loudspeaker) as the detection target by using a sensor based on a technology like millimeter-wave radar. Note that the electronic device configured by the present disclosure may also be used to measure vibration or the like from any other measurement target, such as the heartbeat or respiration of a human or an animal, or vibration of a building or a machine, after being calibrated on the basis of the vibration of the speaker as described below.

In an embodiment, the electronic device can also be used not only to detect vibration such as the pulse of a living thing such as a human or an animal, but also to detect vibration of various objects. In this context, various objects may include a living thing such as a human or an animal, and may also include any object other than a living thing such as a human or an animal. For example, in an embodiment, the electronic device may also detect vibration of any of various types of electronic devices and/or vibration of a part of any of various types of electronic devices. In this context, vibration of any of various types of electronic devices may include vibration produced by any vibrating body, such as vibration associated with the operation of a machine installed in a factory or the like, vibration of a tool, or vibration of a structure, for example. The detection target may include, for example, an automobile, an automobile engine, a motor, a motorcycle, a ship, an office building, condominium, or other structure, a bridge, a road, a highway, a structure under construction, a tunnel, a machine tool, and an excavator.

An electronic device according to an embodiment may be installed in any stationary object, and may also be installed in any moving object. An electronic device according to an embodiment can transmit a transmission wave from a transmitting antenna to the surroundings of the electronic device. An electronic device according to an embodiment can receive, from a receiving antenna, a reflected wave resulting from the transmission wave being reflected. At least one of the transmitting antenna or the receiving antenna may be provided in the electronic device, and may also be provided in a radar sensor, for example.

In the following, an electronic device according to an embodiment is described as stationary. An electronic device according to an embodiment may also be installed in a moving body such as an automobile, for example. By being installed in a moving body such as an automobile, for example, an electronic device according to an embodiment may detect vibration such as the heartbeat of an occupant on board the moving body. On the other hand, the target of which vibration is to be detected by an electronic device according to an embodiment may be stationary, moving, or vibrating while remaining stationary. Like an ordinary radar sensor, an electronic device according to an embodiment can measure the distance and the like between the electronic device and an object in the surroundings of the electronic device in situations in which the object may move. An electronic device according to an embodiment can measure the distance and the like between the electronic device and an object even if the electronic device and the object are both stationary.

The following describes an electronic device according to an embodiment in detail, with reference to the drawings. First, an example of the detection of an object by an electronic device according to an embodiment will be described.

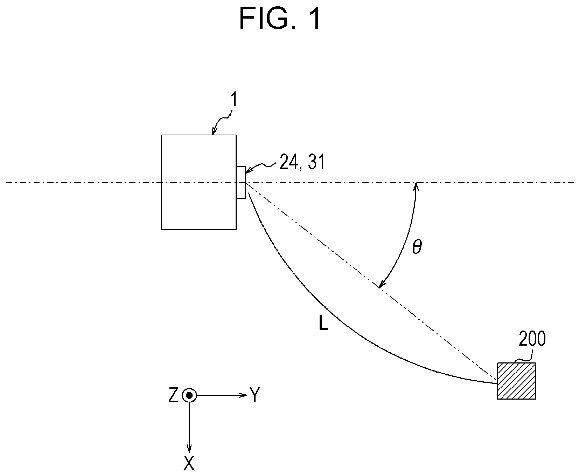

FIG. 1 is a diagram for describing an example of how an electronic device according to an embodiment is used. FIG. 1 illustrates an example of an electronic device provided with the functions of a sensor provided with a transmitting antenna and a receiving antenna according to an embodiment.

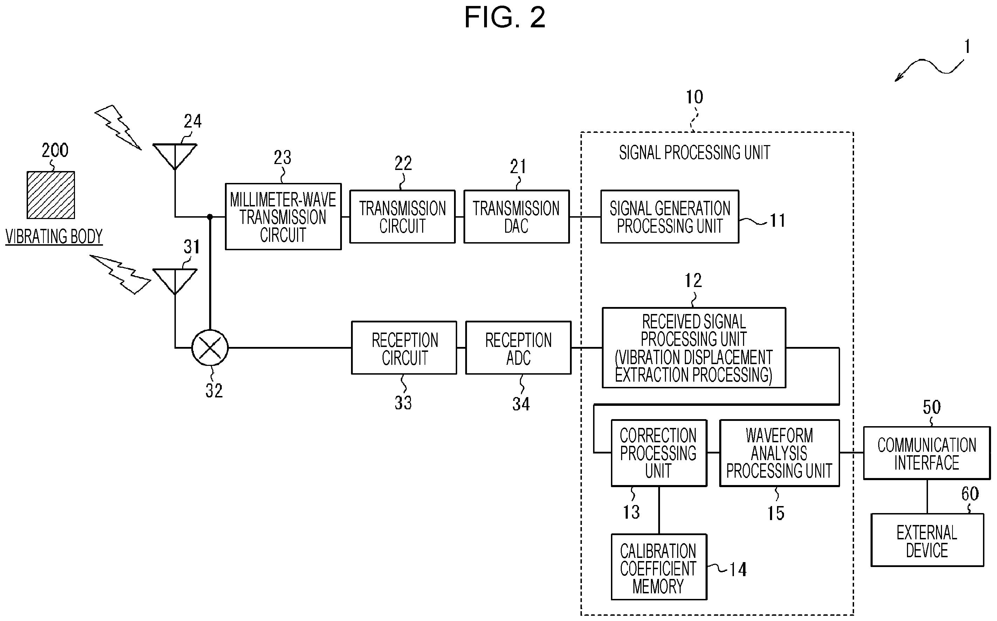

As illustrated in FIG. 1, in an embodiment, an electronic device 1 may be provided with a transmission unit and a reception unit. As described later, the transmission unit may be provided with a transmitting antenna array 24. The reception unit may be provided with a receiving antenna array 31. Specific configurations of the electronic device 1, the transmission unit, and the reception unit will be described later. For simplicity, FIG. 1 illustrates a situation in which the electronic device 1 is provided with the transmitting antenna array 24 and the receiving antenna array 31. The electronic device 1 may also include at least one other functional unit, as appropriate, such as at least a portion of a signal processing unit 10 (FIG. 2) included in the electronic device 1. The electronic device 1 may be provided with at least one other functional unit outside the electronic device 1, such as at least a portion of a signal processing unit 10 (FIG. 2) included in the electronic device 1. In FIG. 1, the electronic device 1 may be moving, but may also be stationary without moving.

The example illustrated in FIG. 1 illustrates in a simplified manner the transmission unit provided with the transmitting antenna array 24 and the reception unit provided with the receiving antenna array 31 in the electronic device 1. The electronic device 1 may also be provided with a plurality of transmission units and/or a plurality of reception units, for example. The transmission unit may be provided with a transmitting antenna array 24 formed from a plurality of transmitting antennas. The reception unit may be provided with a receiving antenna array 31 formed from a plurality of receiving antennas. The position where the transmission unit and/or reception unit are installed in the electronic device 1 is not limited to the position illustrated in FIG. 1, and may be another position, as appropriate. The number of transmission units and/or reception units may be any number equal to or greater than 1, according to various conditions (or requirements) such as the range and/or precision of vibration detection by the electronic device 1.

As described later, the electronic device 1 transmits an electromagnetic wave as a transmission wave from the transmitting antenna array 24. For example, if a given object (for example, the subject 200 illustrated in FIG. 1) is present in the surroundings of the electronic device 1, at least a portion of the transmission wave transmitted from the electronic device 1 is reflected by the object to become a reflected wave. Such a reflected wave is then received by the receiving antenna array 31 of the electronic device 1, for example, whereby the electronic device 1 can detect the subject as a target.

Typically, the electronic device 1 provided with the transmitting antenna array 24 may be a radio detection and ranging (RADAR) sensor that transmits and receives radio waves. However, the electronic device 1 is not limited to a radar sensor. In an embodiment, the electronic device 1 may also be, for example, a sensor based on light detection and ranging (LIDAR) technology, also known as laser imaging detection and ranging, which involves light waves. Sensors such as these can be configured to include a patch antenna or the like. Since technologies such as RADAR and LIDAR are already known, a detailed description of these technologies may be simplified or omitted, as appropriate. In an embodiment, the electronic device 1 may also be a sensor based on a technology that detects objects by transmitting and receiving sonic or ultrasonic waves, for example.

The electronic device 1 illustrated in FIG. 1 receives from the receiving antenna array 31 a reflected wave of a transmission wave transmitted from the transmitting antenna array 24. With this arrangement, the electronic device 1 can detect a given subject 200 present within a given distance from the electronic device 1 as a target. For example, as illustrated in FIG. 1, the electronic device 1 can measure the distance L between the electronic device 1 and a given subject 200. The electronic device 1 can also measure the relative velocity between the electronic device 1 and a given subject 200. The electronic device 1 can also measure the direction (angle of arrival θ) from which the reflected wave from a given subject 200 arrives at the electronic device 1.

In FIG. 1, the XY plane may be defined as the plane substantially parallel to the ground, for example. In this case, the positive direction of the Z axis illustrated in FIG. 1 may indicate the vertically upward direction. In FIG. 1, the electronic device 1 may be installed on a plane parallel to the XY plane. In FIG. 1, the subject 200 may be standing on the ground substantially parallel to the XY plane, for example.

The subject 200 may be a human being or the like present in the surroundings of the electronic device 1, for example. The subject 200 may also be a living thing other than a human being, such as an animal, present in the surroundings of the electronic device 1, for example. The subject 200 may include, for example, an automobile, an automobile engine, a motor, a motorcycle, a ship, an office building, condominium, or other structure, a bridge, a road, a highway, a structure under construction, a tunnel, a machine tool, and an excavator present in the surroundings of the electronic device 1. As described above, the subject 200 may be moving, and may also be stopped or stationary. In the present disclosure, the object to be detected by the electronic device 1 includes inanimate things such as any object, as well as living things such as people, dogs, cats, horses, and other animals. The object to be detected by the electronic device 1 according to the present disclosure may also include a target, including a person, a thing, an animal, or the like, that is detected by radar technology. In the present disclosure, a target may include a person, a thing, an animal, or the like. The following description assumes that the object such as the subject 200 present in the surroundings of the electronic device 1 is a living thing or an inanimate thing. In an embodiment, the electronic device 1 detects vibration of an object such as the subject 200. Accordingly, in the following, the "subject 200" is also referred to as the "vibrating body 200", as appropriate.

In FIG. 1, the ratio of the size of the electronic device 1 to the size of the subject 200 does not necessarily indicate the actual ratio. In FIG. 1, the transmitting antenna array 24 of the transmission unit and the receiving antenna array 31 of the reception unit are illustrated as being installed on the outside of the electronic device 1. However, in an embodiment, the transmitting antenna array 24 of the transmission unit and/or the receiving antenna array 31 of the reception unit may be installed at various positions in the electronic device 1. For example, in an embodiment, the transmitting antenna array 24 of the transmission unit and/or the receiving antenna array 31 of the reception unit may be installed inside the electronic device 1, and may not appear on the exterior of the electronic device 1.

The following describes a typical example in which the transmitting antenna of the electronic device 1 transmits radio waves in a frequency band such as millimeter waves (30 GHz or higher) or quasi-millimeter waves (for example, around 20-30 GHz). On the other hand, the transmitting antenna of the electronic device 1 may also transmit radio waves with a frequency bandwidth of 4 GHz, such as from 77 GHz to 81 GHz, for example. The transmitting antenna of the electronic device 1 may also transmit radio waves of high frequency (for example, 30 GHz to 300 GHz) in or above the millimeter-wave band.

FIG. 2 is a function block diagram schematically illustrating an example configuration of the electronic device 1 according to an embodiment. The following describes an example of the configuration of the electronic device 1 according to an embodiment.

Frequency-modulated continuous-wave radar (hereinafter referred to as FMCW radar) is often used to measure distances and the like using millimeter-wave radar. In FMCW radar, a transmission signal is generated by sweeping the frequencies of the radio waves to be transmitted. Accordingly, in a millimeter-wave FMCW radar that uses radio waves in the 79 GHz frequency band, for example, the frequencies of the radio waves to be used have a frequency bandwidth of 4 GHz, such as from 77 GHz to 81 GHz, for example. Radar in the 79 GHz frequency band is characterized by having a wider usable frequency bandwidth than other millimeter/quasi-millimeter wave radars, such as radars in the 24 GHz, 60 GHz, and 76 GHz frequency bands, for example. The following describes such an embodiment as an example.

The radar scheme of the FMCW radar used in the present disclosure may include a fast-chirp modulation (FCM) scheme that transmits chirp signals on a shorter period than usual. The signal that the electronic device 1 generates is not limited to a signal of the FMCW scheme. The signal that the electronic device 1 generates may also be a signal of any of various schemes other than the FMCW scheme. A transmission signal sequence stored in any storage unit may be different depending on these various schemes. For example, in the case of a radar signal of the FMCW scheme described above, a signal of increasing frequency and a signal of decreasing frequency at each time sample may be used. Known technologies can be applied, as appropriate, for the various schemes described above, and thus a more detailed description is omitted.

As illustrated in FIG. 2, in an embodiment, the electronic device 1 is provided with a signal processing unit 10. The signal processing unit 10 may be provided with a signal generation processing unit 11, a received signal processing unit 12, a correction processing unit 13, a calibration coefficient memory 14, and a waveform analysis processing unit 15. The signal generation processing unit 11 performs processing to generate a transmission signal to be transmitted from the electronic device 1. The received signal processing unit 12 can perform various signal processing on a received signal that the electronic device 1 receives. The correction processing unit 13 can perform processing to correct a result of the signal processing performed by the received signal processing unit 12. The calibration coefficient memory 14 stores data (for example, a calibration coefficient or a correction value) based on a result of the correction processing performed by the correction processing unit 13. The waveform analysis processing unit 15 can perform waveform analysis processing on a result corrected by the correction processing unit 13, for example. The signal generation processing unit 11, the received signal processing unit 12, the correction processing unit 13, the calibration coefficient memory 14, and the waveform analysis processing unit 15 will be further described later, as appropriate. In the present embodiment, the calibration coefficient memory 14 is described as being included in the signal processing unit 10, but the calibration coefficient memory 14 may also be provided externally to the electronic device 1. The calibration coefficient memory 14 may be connected to the electronic device 1 over a network that is wired, wireless, or a combination of the two, and may transmit data within the calibration coefficient memory 14 to the correction processing unit 13 and/or the like of the electronic device 1. The calibration coefficient memory 14 may also be a storage medium that is removable from the electronic device 1, and data within the calibration coefficient memory 14 may be transmitted from the storage medium to the correction processing unit 13 and/or the like of the electronic device 1.

In an embodiment, the electronic device 1 is provided with a transmission DAC 21, a transmission circuit 22, a millimeter-wave transmission circuit 23, and the transmitting antenna array 24 as the transmission unit. In an embodiment, the electronic device 1 is provided with the receiving antenna array 31, a mixer 32, a reception circuit 33, and a reception ADC 34 as the reception unit. In an embodiment, the electronic device 1 need not include at least one of the functional units illustrated in FIG. 2, and may also include a functional unit other than the functional units illustrated in FIG. 2. The electronic device 1 illustrated in FIG. 2 may be formed using a circuit configured in basically the same and/or similar way as a common radar using electromagnetic waves in the millimeter-wave band or the like. On the other hand, in the electronic device 1 according to an embodiment, the signal processing by the signal processing unit 10 may include processing different from the processing performed by a common radar of the related art.

In an embodiment, the signal processing unit 10 provided in the electronic device 1 can control operations by the electronic device 1 as a whole, including control of each of the functional units that make up the electronic device 1. In particular, the signal processing unit 10 performs various processing with respect to signals handled by the electronic device 1. To provide control and processing power for executing various functions, the signal processing unit 10 may include at least one processor, such as a central processing unit (CPU) or a digital signal processor (DSP). The signal processing unit 10 may be realized entirely with a single processor, with several processors, or with respectively discrete processors. The processor may be realized as a single integrated circuit. An integrated circuit is also referred to as an IC. The processor may be realized as a plurality of communicatively connected integrated circuits and discrete circuits. The processor may be realized on the basis of any of various other known technologies. In an embodiment, the signal processing unit 10 may be configured as a CPU (hardware) and a program (software) executed by the CPU, for example. In the electronic device 1 according to an embodiment, at least a part of each functional unit constituting the electronic device 1 may also be configured by specific means in which software and hardware resources work together. The signal processing unit 10 may include a storage unit (memory) required for operations by the signal processing unit 10.

The signal generation processing unit 11 of the signal processing unit 10 generates a signal to be transmitted from the electronic device 1. In the electronic device 1 according to an embodiment, the signal generation processing unit 11 may generate a transmission signal such as a chirp signal (transmission chirp signal). In particular, the signal generation processing unit 11 may generate signals (linear chirp signals) whose frequency varies periodically and linearly. For example, the signal generation processing unit 11 may generate chirp signals whose frequency increases periodically and linearly from 77 GHz to 81 GHz over time. As another example, the signal generation processing unit 11 may generate a signal whose frequency periodically and linearly increases (up-chirp) from 77 GHz to 81 GHz and then decreases (down-chirp) over time. The signal that the signal generation processing unit 11 generates may also be preset in the signal processing unit 10, for example. The signal that the signal generation processing unit 11 generates may also be stored in advance in any storage unit or the like in the signal processing unit 10, for example. Since chirp signals used in technical fields such as radar are already known, a more detailed description is simplified or omitted, as appropriate. The signal generated by the signal generation processing unit 11 is supplied to the transmission DAC 21. For this reason, the signal generation processing unit 11 may be connected to the transmission DAC 21.

The transmission DAC (digital-to-analog converter) 21 functions to convert a digital signal supplied from the signal generation processing unit 11 to an analog signal. The transmission DAC 21 may include a common digital-to-analog converter. The signal converted to analog by the transmission DAC 21 is supplied to the transmission circuit 22. For this reason, the transmission DAC 21 may be connected to the transmission circuit 22.

The transmission circuit 22 functions to convert the signal converted to analog by the transmission DAC 21 to an intermediate frequency (IF) band. The transmission circuit 22 may include a common IF-band transmission circuit. The signal processed by the transmission circuit 22 is supplied to the millimeter-wave transmission circuit 23. For this reason, the transmission circuit 22 may be connected to the millimeter-wave transmission circuit 23.

The millimeter-wave transmission circuit 23 functions to transmit the signal processed by the transmission circuit 22 as a millimeter wave (RF wave). The millimeter-wave transmission circuit 23 may include a common millimeter-wave transmission circuit. The signal processed by the millimeter-wave transmission circuit 23 is supplied to the transmitting antenna array 24. For this reason, the millimeter-wave transmission circuit 23 may be connected to the transmitting antenna array 24. The signal processed by the millimeter-wave transmission circuit 23 is also supplied to the mixer 32. For this reason, the millimeter-wave transmission circuit 23 may also be connected to the mixer 32.

The transmitting antenna array 24 is a plurality of transmitting antennas arranged into an array. In FIG. 2, the configuration of the transmitting antenna array 24 is illustrated in a simplified manner. The transmitting antenna array 24 transmits a signal processed by the millimeter-wave transmission circuit 23 to the outside of the electronic device 1. The transmitting antenna array 24 may include a transmitting antenna array used in a common millimeter-wave radar.

In this way, in an embodiment, the electronic device 1 is provided with a transmitting antenna (transmitting antenna array 24) and can transmit a transmission signal (transmission chirp signal, for example) as a transmission wave from the transmitting antenna array 24.

As an example, suppose the case in which an object such as a vibrating body 200 is present in the surroundings of the electronic device 1, as illustrated in FIG. 2. The vibrating body 200 may be such that at least a part thereof generates vibration. In such a situation, at least a portion of the transmission wave transmitted from the transmitting antenna array 24 is reflected by an object such as the vibrating body 200. The at least a portion of the transmission wave transmitted from the transmitting antenna array 24 that is reflected by an object such as the vibrating body 200 may be reflected toward the receiving antenna array 31.

The receiving antenna array 31 receives a reflected wave. The reflected wave may refer to at least a portion of a transmission wave transmitted from the transmitting antenna array 24 that is reflected by an object such as the vibrating body 200.

The receiving antenna array 31 is a plurality of receiving antennas arranged into an array. In FIG. 2, the configuration of the receiving antenna array 31 is illustrated in a simplified manner. The receiving antenna array 31 receives a reflected wave resulting from a transmission wave transmitted from the transmitting antenna array 24 being reflected. The receiving antenna array 31 may include a receiving antenna array used in a common millimeter-wave radar. The receiving antenna array 31 supplies a received signal received as a reflected wave to the mixer 32. For this reason, the receiving antenna array 31 may be connected to the mixer 32.

The mixer 32 converts a signal (transmission signal) processed by the millimeter-wave transmission circuit 23 and a received signal received by the receiving antenna array 31 to an intermediate frequency (IF) band. The mixer 32 may include a mixer used in a common millimeter-wave radar. The mixer 32 supplies a signal generated as a synthesized result to the reception circuit 33. For this reason, the mixer 32 may be connected to the reception circuit 33.

The reception circuit 33 functions to perform analog processing on a signal converted to an IF band by the mixer 32. The reception circuit 33 may include a common reception circuit that performs conversion to an IF band. The signal processed by the reception circuit 33 is supplied to the reception ADC 34. For this reason, the reception circuit 33 may be connected to the reception ADC 34.

The reception ADC (analog-to-digital converter) 34 functions to convert an analog signal supplied from the reception circuit 33 to a digital signal. The reception ADC 34 may include a common analog-to-digital converter. The signal converted to digital by the reception ADC 34 is supplied to the received signal processing unit 12 of the signal processing unit 10. For this reason, the reception ADC 34 may be connected to the signal processing unit 10.

The received signal processing unit 12 of the signal processing unit 10 functions to perform various processing on a digital signal supplied from the reception ADC 34. For example, the received signal processing unit 12 calculates the distance from the electronic device 1 to an object such as the vibrating body 200 on the basis of a digital signal supplied from the reception ADC 34 (distance measurement). The received signal processing unit 12 also calculates the relative velocity of an object such as the vibrating body 200 relative to the electronic device 1 on the basis of a digital signal supplied from the reception ADC 34 (velocity measurement). The received signal processing unit 12 further calculates the bearing angle of an object such as the vibrating body 200 as seen from the electronic device 1 on the basis of a digital signal supplied from the reception ADC 34 (angle measurement or angle-of-arrival estimation). Specifically, I/Q converted data may be inputted into the received signal processing unit 12. By accepting the input of such data, the received signal processing unit 12 performs a fast Fourier transform (2D-FFT) in each of the distance (range) and velocity directions. The received signal processing unit 12 may then perform false alarm suppression and fixed probability conversion by removing noise points through processing such as constant false alarm rate (CFAR). The received signal processing unit 12 can perform angle-of-arrival estimation for points that satisfy the CFAR criterion to obtain the position of an object such as the vibrating body 200. The information generated as a result of the distance measurement, velocity measurement, and angle measurement by the received signal processing unit 12 may be supplied to the correction processing unit 13.

The correction processing unit 13 corrects information generated by the received signal processing unit 12. The correction processing by the correction processing unit 13 will be further described later. Information which pertains to vibration of a vibrating body and which has been corrected by the correction processing unit 13 may be supplied to the calibration coefficient memory 14 and/or the waveform analysis processing unit 15.

The calibration coefficient memory 14 stores data (for example, a calibration coefficient or a correction value) based on a result of the correction processing performed by the correction processing unit 13.

The waveform analysis processing unit 15 performs processing to analyze the waveform of a wave by performing various arithmetic processing, computational processing, and/or the like on information pertaining to the vibration of the vibrating body supplied from the correction processing unit 13 or the calibration coefficient memory 14. The various arithmetic processing, computational processing, and/or the like by the waveform analysis processing unit 15 will be further described later. Information about the waveform analyzed by the waveform analysis processing unit 15 may be supplied to the communication interface 50, for example. For this reason, the waveform analysis processing unit 15 and/or the signal processing unit 10 may be connected to the communication interface 50. Various information resulting from arithmetic processing, computational processing, and/or the like by the signal processing unit 10 may also be supplied to another functional unit other than the communication interface 50.

The communication interface 50 is configured to include an interface that outputs information supplied from the signal processing unit 10 to, for example, an external device 60. The communication interface 50 may output information on at least one selected from the group consisting of the position, velocity, and angle of an object such as the vibrating body 200 as a controller area network (CAN) or other type of signal, for example, to the external device 60 or the like. For example, information on at least one selected from the group consisting of the position, velocity, and angle of an object such as the vibrating body 200 may be supplied to the external device 60 or the like via the communication interface 50. For this reason, the communication interface 50 may be connected to the external device 60 or the like.

As illustrated in FIG. 2, in an embodiment, the electronic device 1 may be connected to the external device 60 in a wired or wireless manner via the communication interface 50. In an embodiment, the external device 60 may be configured to include a computer of any kind, a control device of any kind, and/or the like. In an embodiment, the electronic device 1 may be configured to include the external device 60. The external device 60 may be configured in a variety of ways according to the manner in which information on vibration detected by the electronic device 1 is to be used. Accordingly, a more detailed description of the external device 60 is omitted.

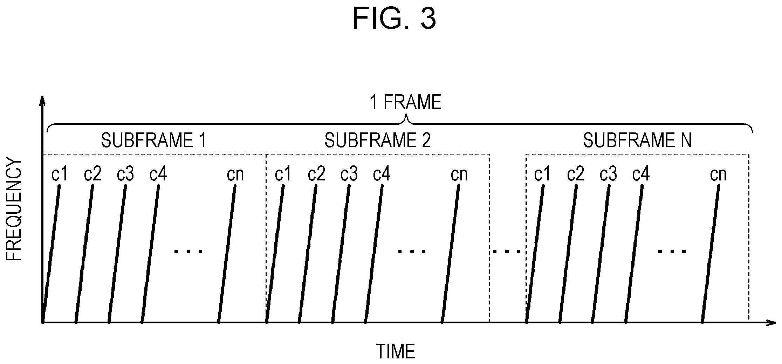

FIG. 3 is a diagram for describing an example of chirp signals generated by the signal generation processing unit 11 of the signal processing unit 10.

FIG. 3 illustrates the temporal structure of one frame in the case of using the fast-chirp modulation (FCM) scheme. FIG. 3 illustrates an example of a received signal of the FCM scheme. FCM is a scheme in which chirp signals illustrated as c1, c2, c3, c4, ..., cn in FIG. 3 are repeated at relatively short intervals (for example, equal to or greater than the round-trip time of electromagnetic waves between the radar and the target as calculated from the maximum ranging distance). In FCM, the transmission and reception processing is often divided into subframe units as illustrated in FIG. 3 for convenient signal processing of a received signal.

In FIG. 3, the horizontal axis represents elapsed time, and the vertical axis represents frequency. In the example illustrated in FIG. 3, the signal generation processing unit 11 generates linear chirp signals whose frequency varies periodically and linearly. In FIG. 3, the chirp signals are indicated as c1, c2, c3, c4, ..., cn. As illustrated in FIG. 3, in each of the chirp signals, the frequency increases linearly over time.

In the example illustrated in FIG. 3, several chirp signals such as c1, c2, c3, c4, ..., cn are included as a single subframe. That is, subframe 1, subframe 2, and so on illustrated in FIG. 3 are each configured to include several chirp signals such as c1, c2, c3, c4, ..., cn. In the example illustrated in FIG. 3, several subframes such as subframe 1, subframe 2, ..., subframe N are included as a single frame (1 frame). That is, the 1 frame illustrated in FIG. 3 is configured to include N subframes. The 1 frame illustrated in FIG. 3 may be frame 1, followed by frame 2, frame 3, and so on. These frames are each configured to include N subframes, in the same and/or similar manner as frame 1. A frame interval of given length may also be included between frames. The single frame illustrated in FIG. 3 may be around 30-50 milliseconds long, for example.

In the electronic device 1 according to an embodiment, the signal generation processing unit 11 may generate a transmission signal as any number of frames. In FIG. 3, some of the chirp signals are omitted from illustration. The relationship between the time and frequency of a transmission signal generated by the signal generation processing unit 11 in this way may be stored as various setting parameters in a storage unit or the like of the signal processing unit 10.

In this way, in an embodiment, the electronic device 1 may transmit a transmission signal formed from subframes including a plurality of chirp signals. In an embodiment, the electronic device 1 may transmit a transmission signal formed from frames including a given number of subframes.

The following describes the electronic device 1 as transmitting a transmission signal with a frame structure as illustrated in FIG. 3. However, the frame structure as illustrated in FIG. 3 is an example, and the chirp signals included in one subframe may be of any kind, for example. That is, in an embodiment, the signal generation processing unit 11 may generate subframes including any number of (for example, any plurality of) chirp signals. The subframe structure illustrated in FIG. 3 is also an example, and the subframes included in one frame may be of any kind, for example. That is, in an embodiment, the signal generation processing unit 11 may generate frames including any number of (for example, any plurality of) subframes. The signal generation processing unit 11 may generate signals of different frequency. The signal generation processing unit 11 may generate a plurality of discrete signals each having a different frequency f.

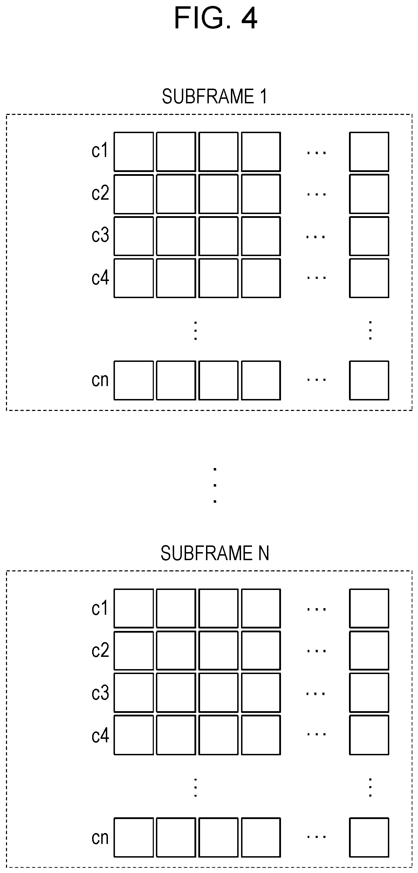

FIG. 4 illustrates another form of a portion of the subframes illustrated in FIG. 3. FIG. 4 is an illustration of the result of the received signal processing unit 12 (FIG. 2) of the signal processing unit 10 performing two-dimensional fast Fourier transform (2D-FFT) processing on samples of a received signal obtained by receiving the transmission signal illustrated in FIG. 3.

As illustrated in FIG. 4, each of chirp signals c1, c2, c3, c4, ..., cn is stored in each of subframes such as subframe 1, ..., subframe N. In FIG. 4, each of the chirp signals c1, c2, c3, c4, ..., cn is formed from samples, which are indicated by the horizontally arrayed grid squares. The received signal illustrated in FIG. 4 is subjected to 2D-FFT, CFAR, integration signal processing on each subframe, and/or the like by the received signal processing unit 12 illustrated in FIG. 2.

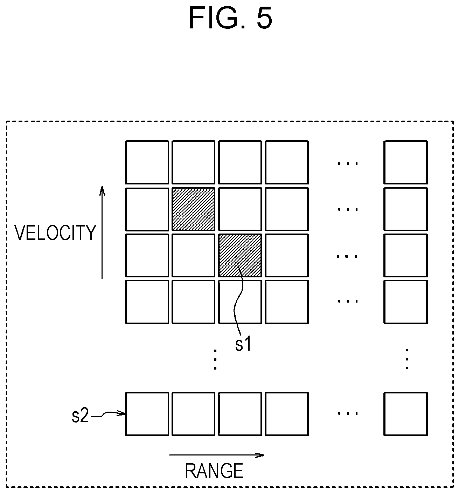

FIG. 5 illustrates an example of a point group in the range-Doppler (range-velocity) plane calculated as a result of performing 2D-FFT, CFAR, and integration signal processing on each subframe in the received signal processing unit 12 illustrated in FIG. 2.

In FIG. 5, the horizontal direction represents range, and the vertical direction represents velocity. The shaded grid square s1 illustrated in FIG. 5 illustrates a point group indicating a signal exceeding CFAR threshold processing. The non-shaded grid square s2 illustrated in FIG. 5 illustrates a bin (2D-FFT sample) with no point group, which did not exceed the CFAR threshold. Direction estimation is used to calculate the bearing, from the radar, of the calculated point group in the range-Doppler plane illustrated in FIG. 5, and the position and velocity in the two-dimensional plane are calculated as a point group indicating an object such as the vibrating body 200. Direction estimation may be calculated by a beamformer and/or a subspace method. Typical subspace method algorithms include MUltiple SIgnal Classification (MUSIC) and estimation of signal parameters via rotational invariant techniques (ESPRIT).

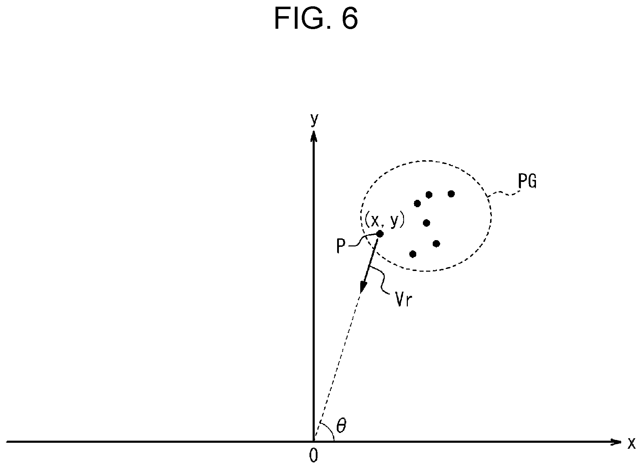

FIG. 6 illustrates an example of the result of the transformation of point group coordinates from the range-Doppler plane illustrated in FIG. 5 to the XY plane by the received signal processing unit 12 after performing direction estimation. The XY plane illustrated in FIG. 6 may be the same as the XY plane illustrated in FIG. 1. As illustrated in FIG. 6, the received signal processing unit 12 can plot a point group PG in the XY plane. The point group PG contains points P. Each of the points P has an angle θ and a radial velocity Vr in polar coordinates.

The received signal processing unit 12 detects an object present in the range where a transmission wave was transmitted, on the basis of at least one of the 2D-FFT or angle estimation results. The received signal processing unit 12 may perform object detection by performing, for example, clustering processing on the basis of respectively estimated information on distance, information on velocity, and angle information. Known algorithms used in clustering data include density-based spatial clustering of applications with noise (DBSCAN), for example. DBSCAN is an algorithm that performs density-based clustering. In the clustering processing, the average power of the points making up a detected object may be calculated, for example. The information on distance, information on velocity, angle information, and information on power pertaining to an object detected in the received signal processing unit 12 may be supplied to the external device 60 or the like via the communication interface 50, for example.

As above, the electronic device 1 may be provided with a transmitting antenna (transmitting antenna array 24), a receiving antenna (receiving antenna array 31), and the signal processing unit 10. The transmitting antenna array 24 transmits a transmission wave formed from a radio wave, for example. The receiving antenna array 31 receives a reflected wave resulting from the transmission wave being reflected. The signal processing unit 10 detects an object (an object such as the vibrating body 200, for example) that reflects the transmission wave, on the basis of the transmission signal transmitted as the transmission wave and the received signal received as the reflected wave.

The following further describes direction estimation of an arriving wave (an arriving reflected wave) by an antenna array of the electronic device 1 according to an embodiment.

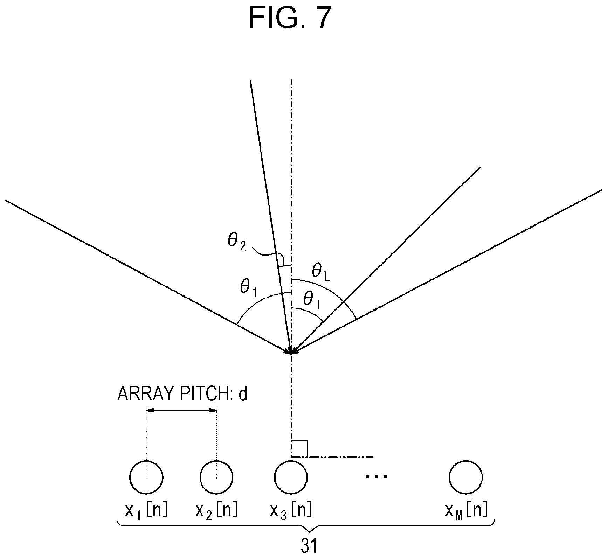

FIG. 7 is a diagram for describing the configuration of the receiving antenna array 31 and the principle of direction estimation of an arriving wave by the receiving antenna array 31 of the electronic device 1 according to an embodiment. FIG. 7 illustrates an example of the reception of radio waves by the receiving antenna array 31.

As illustrated in FIG. 7, the receiving antenna array 31 may be a linear arrangement of sensors such as receiving antennas. As illustrated in FIG. 7, in an embodiment, the receiving antenna array 31 may be configured to include a plurality of receiving antennas in a linear array. In FIG. 7, the plurality of antennas x₁, x₂, x₃, ..., x_{M} that make up the receiving antenna array 31 are illustrated by small circles. The receiving antenna array 31 may include any plurality of antennas. As illustrated in FIG. 7, the plurality of antennas that make up the receiving antenna array 31 are spaced apart from one another by an array pitch d. This type of sensor array, in which sensors (such as antennas, ultrasonic transducers, and microphones) corresponding to various physical waves are disposed in an array, is also referred to as a uniform linear array (ULA). As illustrated in FIG. 7, the physical waves (such as electromagnetic waves and sonic waves) arrive from various directions, such as θ₁ and θ₂, for example. Herein, θ₁ and θ₂ may refer to the angle of arrival described above. In this way, a sensor array like the receiving antenna array 31 can estimate the direction of arrival (angle of arrival) by utilizing the phase difference that occurs in measurement values between sensors according to the direction of arrival of a physical wave. This type of technique for estimating the direction of arrival of a wave is also referred to as angle-of-arrival estimation or direction-of-arrival (DoA) estimation.

In the electronic device 1 according to an embodiment, at least one of the transmitting antenna array 24 or the receiving antenna array 31 may include a plurality of antennas in a linear arrangement. This allows for appropriate narrowing of directivity in the transmission and reception of radio waves in a millimeter-wave radar, for example. When transmitting a transmission wave, the direction of the transmission beam is often controlled by a beamformer. On the other hand, when receiving a reflected wave, the direction of arrival of the reflected wave is more often estimated by subspace methods (such as MUSIC and ESPRIT described above) than by a beamformer. With beamformers and subspace methods, for electromagnetic waves arriving from various directions in the ULA as illustrated in FIG. 7, a phase difference occurs in measurement values between sensors depending on the direction of arrival. Accordingly, this phase difference can be utilized to estimate the direction of arrival of a reflected wave.

The following further describes angle estimation in two directions of an arriving wave by an antenna array of the electronic device 1 according to an embodiment.

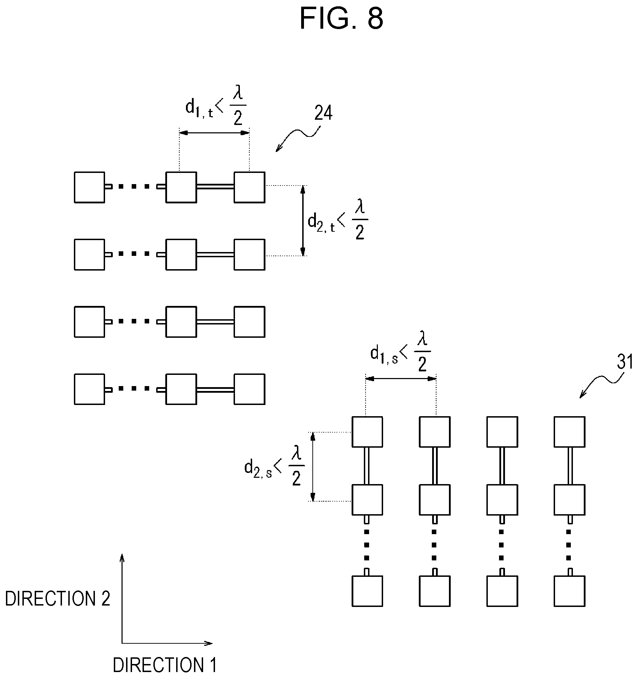

FIG. 8 illustrates an example arrangement of antennas for estimating the direction of arrival with respect to two orthogonal angles.

As illustrated in FIG. 8, in the electronic device 1 according to an embodiment, the transmitting antenna array 24 and/or receiving antenna array 31 may be configured to include an array of a plurality of patch antenna units.

In the transmitting antenna array 24 illustrated in FIG. 8, one patch antenna unit may be configured to include a plurality of elements electrically connected in the direction of direction 1 illustrated in the diagram. In each of the patch antenna units, the plurality of elements may be electrically connected by wiring such as striplines on a board, for example. In each of the patch antenna units, the plurality of elements may be spaced apart from one another by a pitch d_{1,t} shorter than half the wavelength λ of the transmission wave. In FIG. 8, each of the patch antenna units may include any number of two or more elements electrically connected.

As illustrated in FIG. 8, the transmitting antenna array 24 may include a plurality of patch antenna units arrayed in the direction of direction 2 illustrated in the diagram. The patch antenna units may be spaced apart from one another by a pitch d_{2,t} shorter than half the wavelength λ of the transmission wave. In an embodiment, the transmitting antenna array 24 may include any number of two or more patch antenna units.

As illustrated in FIG. 8, in an embodiment, the receiving antenna array 31 may be a variation of the arrangement of the plurality of elements in the transmitting antenna array 24. That is, in the receiving antenna array 31 illustrated in FIG. 8, one patch antenna unit may be configured to include a plurality of elements electrically connected in the direction of direction 2 illustrated in the diagram. In each of the patch antenna units, the plurality of elements may be electrically connected by wiring such as striplines on a board, for example. In each of the patch antenna units, the plurality of elements may be spaced apart from one another by a pitch d_{2,s} shorter than half the wavelength λ of the transmission wave. In FIG. 8, each of the patch antenna units may include any number of two or more elements electrically connected.

As illustrated in FIG. 8, the receiving antenna array 31 may include a plurality of patch antenna units arrayed in the direction of direction 1 illustrated in the diagram. The patch antenna units may be spaced apart from one another by a pitch d_{1,s} shorter than half the wavelength λ of the transmission wave. In an embodiment, the receiving antenna array 31 may include any number of two or more patch antenna units.

The elements included in the transmitting antenna array 24 and the receiving antenna array 31 may all be arranged in the same plane (on the surface layer of the same board, for example). The transmitting antenna array 24 and the receiving antenna array 31 may also be arranged in proximity to each other (monostatic). Direction 1 and direction 2 illustrated in FIG. 8 may be geometrically orthogonal.

With the transmitting antenna array 24 and the receiving antenna array 31 as illustrated in FIG. 8, the directivity of each of the transmitting antenna and the receiving antenna can be narrowed appropriately. By using the transmitting antenna array 24 as illustrated in FIG. 8 to control the direction in which to transmit each transmission wave at each timing for transmitting a transmission wave (transmission signal), a beamformer can be realized for the direction of direction 2 illustrated in FIG. 8. By using the receiving antenna array 31 as illustrated in FIG. 8, estimation of the direction of arrival of the reflected wave can be realized for the direction of direction 1 illustrated in FIG. 8. This enables estimation of the direction of arrival of a reflected wave with respect to two substantially orthogonal angles. Accordingly, a point group indicating an object such as the vibrating body 200 can be acquired three-dimensionally.

The following describes a technique for detecting vibration of the vibrating body 200 by using the electronic device 1 according to an embodiment.

As described above, a millimeter-wave radar sensor (millimeter-wave sensor) is capable of detecting vibration of an object by using the micro-Doppler phenomenon. A millimeter-wave sensor can perform distance measurement and/or angle measurement. For this reason, by narrowing the region in which to perform distance measurement and/or angle measurement, a millimeter-wave sensor can measure an average displacement of vibration within a range (surface) contained in the region. However, measuring the average displacement of vibration within a prescribed range (surface) using a vibration sensor other than a millimeter-wave sensor is not necessarily straightforward. For this reason, innovation is needed to calibrate a millimeter-wave sensor by using another vibration sensor that has already been calibrated. The ability to calibrate a millimeter-wave sensor by using another sensor capable of detecting vibration more accurately would allow for the detection, with good precision, of vibration of a vibrating body by transmitting and receiving millimeter waves. The ability to detect, with good precision, vibration of a vibrating body by transmitting and receiving waves, such as millimeter waves for example, could be useful in a wide variety of fields.

The following describes a form in which a millimeter-wave sensor is calibrated by using another sensor capable of detecting vibration more accurately.

The following describes how the vibrating body 200, for example, is detected in the 2D-FFT plane as a result of the 2D-FFT (FIGs. 3 and 4) performed using a sensor based on millimeter-wave radar technology, as in the electronic device 1 according to an embodiment.

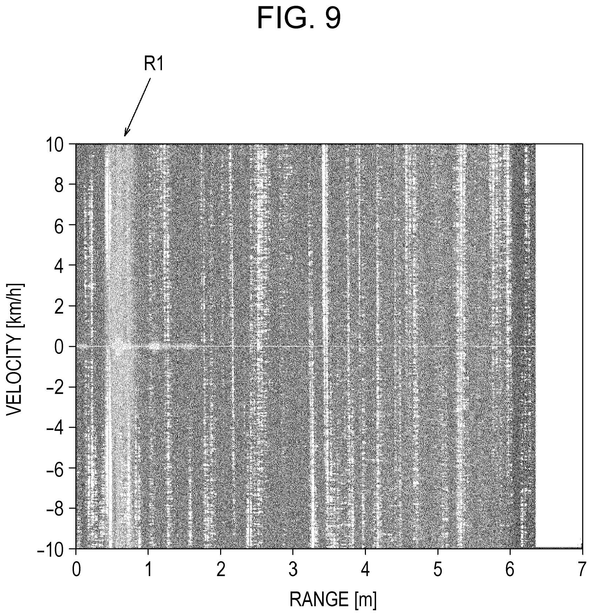

FIG. 9 illustrates an example of a result of a 2D-FFT processing result when the vibrating body 200 is measured by the electronic device 1 according to an embodiment. The graph illustrated in FIG. 9 illustrates the overall result of 2D-FFT processing executed by (the received signal processing unit 12 of) the signal processing unit 10 of the electronic device 1 according to an embodiment. In the graph illustrated in FIG. 9, the horizontal axis represents range and the vertical axis represents velocity. The graph illustrated in FIG. 9, the extent of the range from 0 m to about 6.3 m is illustrated such that the brighter the color of a portion is, the stronger the intensity of the signal is in that portion. FIG. 9 illustrates a section in the vicinity of a range R1 where a spectrum indicating vibration of the vibrating body 200 is present. The portion of the spectrum illustrated in the vicinity of the range R1 contains information on vibration by the vibrating body 200.

Let data S(Ω_{R}[m], Ω_{D}[n]) denote data obtained by filtering the data of the vibration of the vibrating body 200, such as by extracting only the signal in the range bins of the bright portions of the data of the 2D-FFT processing illustrated in FIG. 9 within the extent of the range from 0 m to about 6.3 m. An inverse Fourier transform can be applied to this data S(Ω_{R}[m], Ω_{D}[n]) to obtain s(t_{R}, t_{D}), which is an intermediate frequency signal (I/F signal) that primarily contains only the vibration of the vibrating body 200. In this context, Ω_{R}[m] and Ω_{D}[n] represent the 2D-FFT range frequency and Doppler frequency, respectively. Also, each of t_{R}[1] and t_{D}[k] is a time at which the I/F signal is sampled in the time domain. Since the above are all discrete values, the reconstruction of the I/F signal is calculated using the discrete Fourier transform as in the following expression (1).
[Math. 1] $s \left({t}_{R}\left[l\right],{t}_{D}\left[k\right]\right) = {\sum }_{n = 0}^{N} {\sum }_{m = 0}^{M} S \left({Ω}_{R}\left[m\right],{Ω}_{D}\left[n\right]\right) exp \left(-j2π\left(\frac{{Ω}_{R} \left[m\right] {t}_{R} \left[l\right]}{M}+\frac{{Ω}_{D} \left[n\right] {t}_{D} \left[k\right]}{N}\right)\right)$

The vibration waveform is calculated as follows from the I/F signal containing the vibration of the vibrating body 200 obtained using expression (1) above. The I/F signal is summed the range-sampling direction, as indicated in the following expression (2).
[Math. 2] ${s}_{sum} = \left[{\sum }_{l = {l}_{1}}^{{l}_{2}} s \left({t}_{R}\left[l\right],{t}_{D}\left[{k}_{0}\right]\right), {\sum }_{l = {l}_{1}}^{{l}_{2}} s \left({t}_{R}\left[l\right],{t}_{D}\left[{k}_{1}\right]\right) , … , {\sum }_{l = {l}_{1}}^{{l}_{2}} s \left({t}_{R}\left[l\right],{t}_{D}\left[{k}_{N}\right]\right)\right]$

By taking the phase angle, on the Gaussian plane, of the complex signal vector sₛᵤₘ indicated in expression (2) above and multiplying by a coefficient, a time-series vector of vibration displacement can be obtained, as indicated in the following expression (3).
[Math. 3] ${D}_{vib} = \frac{λ}{4 π} arg \left({s}_{sum}\right)$

As an example, the following models and describes a form in which the vibration of the vibrating body 200, which is configured as a loudspeaker, is measured by the electronic device 1, which is configured as a millimeter-wave sensor.

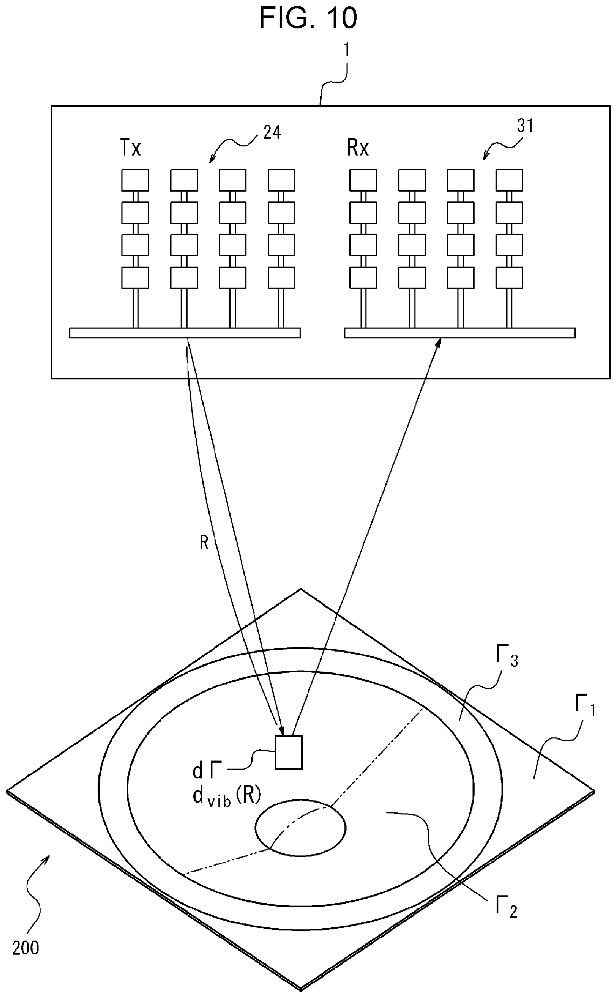

FIG. 10 models and illustrates a form in which the vibration of the vibrating body 200 is measured by the electronic device 1 according to an embodiment. As illustrated in FIG. 10, the vibrating body 200 may be a loudspeaker, for example. In an embodiment, the electronic device 1 may be configured to include a millimeter-wave sensor.

As illustrated in FIG. 10, the electronic device 1 is provided with a transmitting antenna array 24 and a receiving antenna array 31. A transmission wave transmitted from the transmitting antenna array 24 travels a range R to reach the vibrating body 200. At least a portion of the transmission wave transmitted from the transmitting antenna array 24 is reflected by the vibrating body 200, thereby becoming a reflected wave. The reflected wave reflected by the vibrating body 200 travels the range R to reach the electronic device 1, and is received by the receiving antenna array 31. In this way, the electronic device 1 performs processing as described above with respect to the vibrating body 200 by transmitting and receiving radio waves.

In FIG. 10, the vibrating body 200 is illustrated schematically. In the vibrating body 200 illustrated in FIG. 10, a frame part Γ₁ constituting an outer frame of the loudspeaker is assumed to be made of a highly rigid material such as metal. In the vibrating body 200, a cone-shaped diaphragm Γ₂ is assumed to be bonded using a dome of a low-elasticity material. In the vibrating body 200, an edge part Γ₃ of the loudspeaker connects the cone-shaped diaphragm Γ₂ and the frame part Γ₁. The edge part Γ₃ is formed from an elastic member, and therefore the cone-shaped diaphragm Γ₂ is connected in a state of being movable with respect to the frame part Γ₁. The cone-shaped diaphragm Γ₂ is driven electrically by a magnetic circuit formed from a magnet, a yoke, a voice coil, and/or the like.

As an example, the cone-shaped diaphragm Γ₂ is assumed to be formed from a metal moving body such as aluminum. With such a configuration, millimeter waves are completely reflected off the metal diaphragm surface. Therefore, in such a configuration, the radar cross section (RCS) is simplified as the area of the orthogonal projection of the entire vibrating body 200 as seen from the antenna plane of the electronic device 1.

The I/F signal s(t_{R}[l], t_{D}[k]) in expression (1) described above is the I/F signal obtained mixing the sum of all reflected waves from the entire vibrating body 200, as seen from the electronic device 1 that is a millimeter-wave sensor. Consequently, the vibration displacement in expression (3) above is an average of the vibration across the entire surface of the vibrating body 200, as indicated in the following expression (4).
[Math. 4] ${D}_{vib} = \frac{1}{σ} {∬}_{Γ} {d}_{vib} \left(R\right) dΓ = \frac{1}{σ} \left[{∬}_{{Γ}_{1}} {d}_{vib} \left(R\right) dΓ+{∬}_{{Γ}_{2}} {d}_{vib} \left(R\right) dΓ\right]$

In expression (4) above, σ represents the area of the orthogonal projection of the vibrating body 200 (loudspeaker) as seen from the electronic device 1 (millimeter-wave sensor). R indicates the range between the electronic device 1 and the vibrating body 200. Γ represents the entire region of the vibrating body 200. Γ₁ represents the frame part that can be considered to be vibrationally fixed. Γ₂ represents the cone-shaped diaphragm, which is the diaphragm of the loudspeaker. Also, d_{vib}(R) represents the vibration displacement at the range R from the electronic device 1.

Expression (4) above indicates that the vibration of the vibrating body 200 is influenced by both the frame part Γ₁, which can be considered to be vibrationally fixed, and the cone-shaped diaphragm Γ₂. The first term on the rightmost side of expression (4) above represents the contribution of the vibrationally fixed frame part Γ₁. In this way, the contribution of the vibrationally fixed frame part Γ₁ is unnecessary for measuring vibration displacement. The vibrationally fixed frame part Γ₁ contributes as a constant or a slow vibration displacement bias. Therefore, excluding the contribution of the frame part Γ₁ is desirable.

The influence of the contribution from the frame part Γ₁ is difficult to exclude through conventional millimeter-wave radar signal processing such as 2D-FFT processing, CFAR processing, and range bin filter processing. Accordingly, another approach is to use frequency filtering or the like to exclude the influence of the contribution from the frame part Γ₁ from the time-series vector D_{vib} of the vibration waveform. However, even if such filtering is applied, it is difficult to completely exclude the influence on the vibration displacement. It is also anticipated that perturbations in the vibration displacement due to other influences may also be introduced. Consequently, if the electronic device 1 according to an embodiment is configured to include a millimeter-wave sensor, it may be necessary to calibrate the millimeter-wave sensor by using a measuring instrument that serves as a reference.

The following describes problems that arise in the calibration of the electronic device 1 configured to include a millimeter-wave sensor.

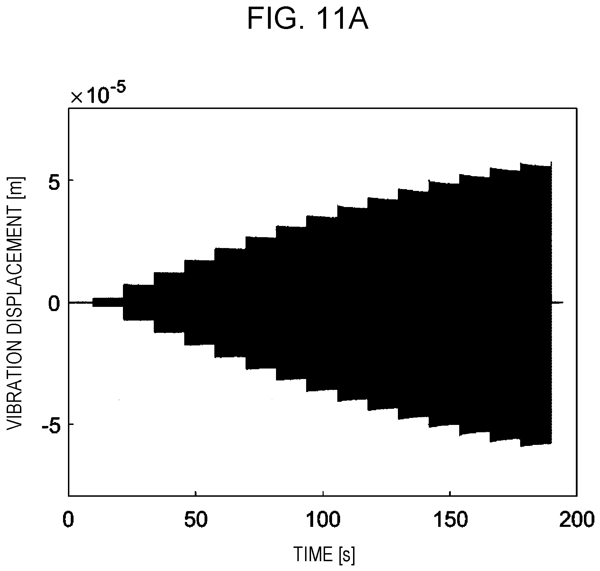

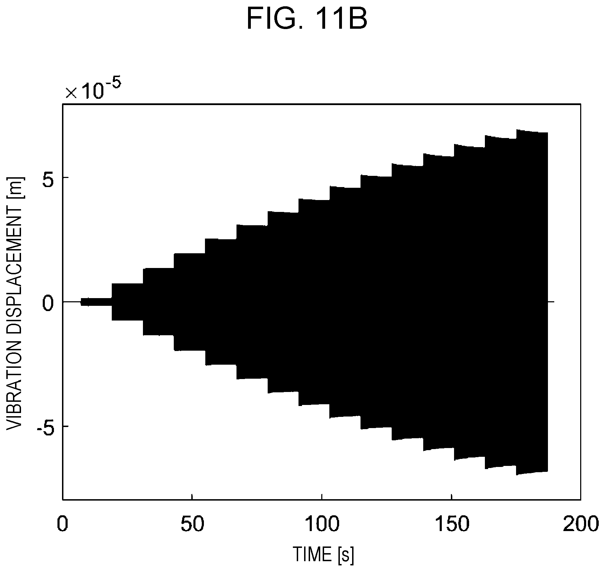

FIG. 11A is a graph illustrating a waveform of vibration displacement obtained by using a millimeter-wave sensor (electronic device 1) to measure the vibration displacement of a loudspeaker at 750 Hz. FIG. 11B is a graph illustrating a waveform of vibration displacement obtained by using a laser Doppler vibrometer (LDV) to measure the vibration displacement of the same loudspeaker at 750 Hz. FIGs. 11A and 11B both illustrate an example in which a voltage with a frequency of 750 Hz is applied to the loudspeaker, and the voltage is raised by steps. In both FIGs. 11A and 11B, the horizontal axis represents elapsed time and the vertical axis represents vibration displacement. An LDV measures vibration at a single point (for example, the center point on a dust cap of the loudspeaker) irradiated by a laser. In contrast, a millimeter-wave sensor measures an average value of vibration displacement by measuring the vibrating surface as a whole. Therefore, as illustrated in FIGs. 11A and 11B, measurement values from the two instruments differ by about 10% to 20% (the measurement result from the millimeter-wave sensor is 10% to 20% smaller). Consequently, it is difficult to calibrate the millimeter-wave sensor itself by simply comparing a measurement result regarding vibration at a single point from the LDV to a measurement result from the millimeter-wave sensor.

Accordingly, in an embodiment, the electronic device 1 executes the following two-stage measurement and signal processing to calibrate a Doppler radar such as a millimeter-wave sensor.

### A. Measurement of vibration of reference vibrating body

### B. Calibration of electronic device 1 (millimeter-wave sensor) using reference vibrating body

In an embodiment, the electronic device 1 measures vibration of a vibrating body by using a Doppler radar operating at high frequencies (20 GHz or higher) in the millimeter-wave band or higher that uses electromagnetic waves or sound waves to perform distance measurement, angle estimation (angle measurement), and Doppler velocity detection. In an embodiment, the electronic device 1 can be used to calibrate an absolute value of vibration amplitude when using a Doppler radar as described above to measure vibration of a vibrating body. In an embodiment, the electronic device 1 can calibrate a millimeter-wave sensor and thereby use the millimeter-wave sensor to measure a vibration amplitude of a vibrating body accurately.

The following further describes each of "A. Measurement of vibration of reference vibrating body" and "B. Calibration of electronic device 1 (millimeter-wave sensor) using reference vibrating body" mentioned above.

### (A. Measurement of vibration of reference vibrating body)

In the following, an electro-mechanical-acoustic transducer capable of generating vibration in the range from tens of Hz to 10 kHz or higher, such as a loudspeaker for example, is used as a reference vibrating body. A millimeter-wave sensor detects an average vibration displacement by integrating all vibration components within an extent (field of view; hereinafter referred to as FOV) irradiated with radio waves. Thus, in this context, it may be necessary to acquire the average vibration displacement across the entire vibrating surface of the reference vibrating body in response to an electrical signal.

One conceivable way of acquiring an average vibration displacement of the reference vibrating body is to use an LDV to take measurements according to one of the following methods.
(1) Perform vibration measurement at one point on the reference vibrating body, then use a numerical analysis approach such as the finite element method to obtain a vibration amplitude of the measurement point and the frequency response of average displacement
(2) Scan the entire vibrating surface of the reference vibrating body

The following description focuses on (1) above, which is expected to be more realistically feasible.

In (1) above, it is important to determine what kind of frequency characteristics is exhibited by the ratio of the vibration displacement at the center (dust cap center) of a loudspeaker (having a diaphragm diameter of about 10 cm) like the one illustrated in FIG. 10 to the overall average vibration displacement. Measuring vibration across the entire surface of a vibrating body, such as a reference vibrating body, is not a typical approach. For this reason, it may be necessary to obtain the ratio of the vibration displacement to the overall average vibration displacement by analyzing the characteristics of the vibrating body in further detail using numerical analysis or the like.

The ratio r(fᵢ) of the vibration displacement at the center (dust cap center) to the average vibration displacement of a loudspeaker like the one illustrated in FIG. 10 is formulated as indicated in the following expression (5).
[Math. 5] $r \left({f}_{i}\right) = \frac{{d}_{calc , mean} \left({f}_{i}\right)}{{d}_{calc , point} \left({f}_{i}\right)}$

In expression (5) above, d_{calc,point}(fᵢ) indicates the displacement frequency response at the center point of the reference vibrating body. Also, d_{calc,mean}(fᵢ) indicates the average vibration displacement across the entire vibrating surface of the reference vibrating body. Also, fᵢ indicates the i-th discrete frequency.

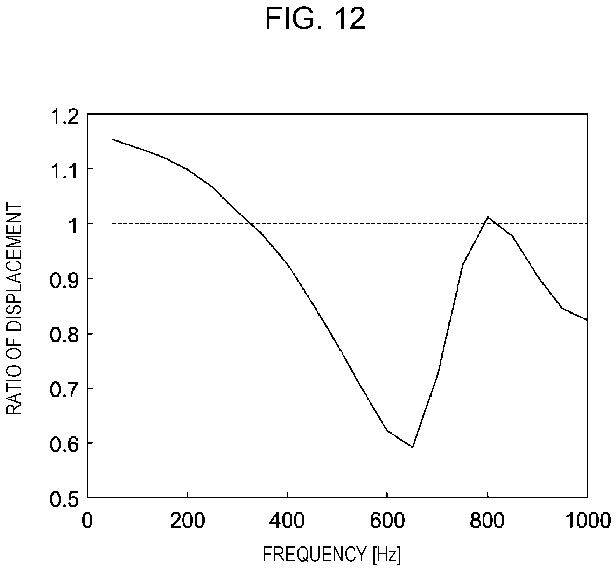

FIG. 12 is a graph illustrating an example of a result of calculating r(fᵢ) in expression (5) above by the finite element method. FIG. 12 illustrates an example of a result of calculating, by the finite element method, the ratio of the vibration displacement at the center position to the average vibration displacement of a loudspeaker serving as a reference vibrating body. In FIG. 12, the horizontal axis represents frequency and the vertical axis represents the ratio of displacement.

In FIG. 12, the graph indicated by the dashed line is an illustration of r(fᵢ) for an ideal piston diaphragm. In an ideal piston diaphragm, the vibration displacement at any given point is exactly equal to the average vibration. For this reason, in an ideal piston diaphragm, r(fᵢ) is naturally 1. In other words, in an ideal piston diaphragm, even if the number of vibrations changes, the average value across the entire surface does not change. For this reason, in an ideal piston diaphragm, r(fᵢ) can be said to have no frequency dependence.

On the other hand, the graph indicated by the solid line in FIG. 12 is an illustration of r(fᵢ) of a loudspeaker. In a loudspeaker, r(fᵢ) is known to have frequency characteristics centered on 1. In other words, in a loudspeaker, r(fᵢ) has frequency dependence.

The following examines the relationship between the size of the reference vibrating body and the FOV, which is determined from the directivity of wave transmission and reception.

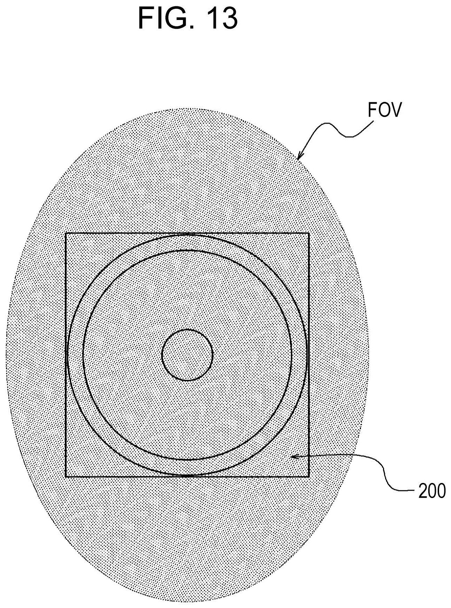

FIG. 13 illustrates an example of the relationship between the size of the reference vibrating body and the FOV, which is determined from the directivity of wave transmission and reception. As illustrated in FIG. 13, the vibrating body 200 is the reference vibrating body, in this case a loudspeaker. In FIG. 13, the FOV is an extent determined by the directivity of wave transmission and reception and by the already-described direction estimation processing as received signal processing. In other words, vibration within the extent of the FOV is set to allow for measurement by a millimeter-wave sensor. As illustrated in FIG. 13, by setting the FOV to contain the entirety of the reference vibrating body, all vibrations of the reference vibrating body are summed.

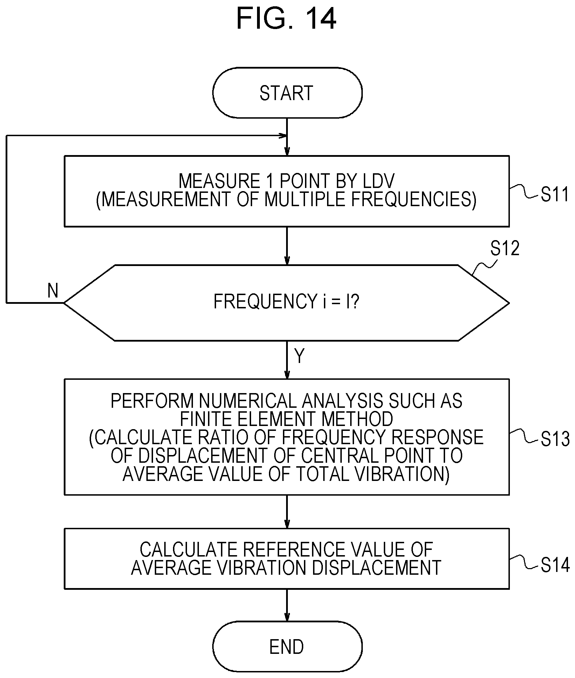

The following describes operations for generating data on the average vibration displacement of the reference vibrating body to be used in the electronic device 1 according to an embodiment. FIG. 14 is a flowchart for describing the generation of data on the average vibration displacement of a vibrating body serving as a reference.

In step S11, an LDV or the like is used to measure one point on the reference vibrating body. In step S11, measurement by an LDV or the like can be used to obtain frequency characteristics d_{ref,meas,}(fᵢ) of the vibration displacement at one measurement point.

In step S12, it is determined whether the frequency i has reached a number I of frequency points. If the frequency i has not reached the number I of frequency points, the operation in step S11 is repeated to measure multiple frequencies. On the other hand, when the frequency i has reached the number I of frequency points, the flow may advance to the operation in step S13. In other words, FIG. 14 indicates that the looping of the operation in step S11 causes one point on the reference vibrating body to be measured by an LDV or the like for each of multiple values of the frequency fᵢ.

In step S13, r(fᵢ) is obtained through numerical analysis such as the finite element method, as described above. As described above, r(fᵢ) represents the ratio of the displacement frequency response d_{calc,point}(fᵢ) at the center point of the reference vibrating body to the average vibration displacement d_{calc,mean}(fᵢ) across the entire vibrating surface of the reference vibrating body (expression (5) above).

In step S14, d_{ref,meas,}(fᵢ) and r(fᵢ) are used as a basis for calculating a reference value of the average vibration displacement of the reference vibrating body according to the following expression (6).
[Math. 6] ${d}_{ref} \left({f}_{i}\right) = r \left({f}_{i}\right) \times {d}_{ref , meas ,} \left({f}_{i}\right)$

In expression (6) above, d_{ref}(fᵢ) is the data on the average vibration displacement of the reference vibrating body obtained according to the flowchart illustrated in FIG. 14.

### (B. Calibration of electronic device 1 (millimeter-wave sensor) using reference vibrating body)

The following describes operations for calibrating the electronic device 1 (millimeter-wave sensor) using the reference vibrating body. In the following, the electronic device 1 (millimeter-wave sensor) according to an embodiment is calibrated by considering the measured frequency characteristics of the average vibration displacement across the entire vibrating surface of the reference vibrating body in response to an electrical signal.

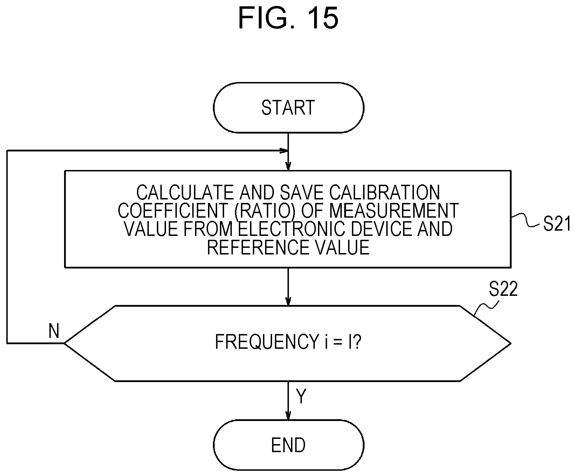

FIG. 15 is a flowchart for describing operations executed by the electronic device 1 according to an embodiment. FIG. 15 may be considered a flowchart illustrating operations to be performed when individually calibrating multiple millimeter-wave sensors, for example. FIG. 15 may be considered a flowchart to be followed when using data d_{ref}(fᵢ) pertaining to a reference vibrating body to individually calibrate multiple millimeter-wave sensors.

When the operations illustrated in FIG. 5 start, in step S21, the signal processing unit 10 of the electronic device 1 according to an embodiment may calculate and save a calibration coefficient (ratio) of a measurement value of the reference vibrating body from the electronic device 1 to a reference value. In step S21, the signal processing unit 10 may calculate and save the calibration coefficient (ratio) by comparing the measurement value of the reference vibrating body from the electronic device 1 to the reference value. In step S21, the signal processing unit 10 can calculate a calibration coefficient (correction value) c_{calib}(fᵢ) as in the following expression (7).
[Math. 7] ${c}_{calib} \left({f}_{i}\right) = {d}_{ref} \left({f}_{i}\right) / {d}_{mmwave} \left({f}_{i}\right)$

The frequency response d_{mmwave}(fᵢ) of the vibration amplitude measured by the electronic device 1 (millimeter-wave sensor) can be obtained by applying a Fourier transform to the time waveform q_{mmwave}(tᵢ) of the vibration amplitude measured by the electronic device 1 (millimeter-wave sensor).

In step S22, it is determined whether the frequency i has reached the number I of frequency points. If the frequency i has not reached the number I of frequency points, the operation in step S21 is repeated to calculate a calibration coefficient for multiple frequencies. On the other hand, when the frequency i has reached the number I of frequency points, the operations illustrated in FIG. 15 may be ended. In other words, FIG. 15 indicates processing in which the looping of the operation in step S21 causes a calibration coefficient to be calculated for each of multiple frequencies by using the average vibration displacement d_{ref}(fᵢ) of the reference vibrating body.

The calibration coefficient (correction value) c_{calib}(fᵢ) obtained by the operations illustrated in FIG. 15 is a coefficient on the frequency axis. For this reason, a time waveform q_{mmwave,calib}(tᵢ) of the vibration amplitude of the calibrated electronic device 1 (millimeter-wave sensor) can be obtained as in the following expression (8). In expression (8), F⁻¹[] represents the inverse Fourier transform.
[Math. 8] ${q}_{mmwave , calib} \left({t}_{i}\right) = {F}^{- 1} \left[{d}_{mmwave}\left({f}_{i}\right)⋅{c}_{calib}\left({f}_{i}\right)\right]$

The calibration coefficient (correction value) c_{calib}(fᵢ) obtained by FIG. 15 and expression (7) above may be saved in any memory of each electronic device 1 (each millimeter-wave sensor system). With this arrangement, each electronic device 1 (each millimeter-wave sensor system) is calibrated automatically every time a measurement is taken. The calibration process by the electronic device 1 according to an embodiment described above may be executed by causing expression (8) above to be calculated by the correction processing unit 13 in the signal processing unit 10 illustrated in FIG. 2, for example.

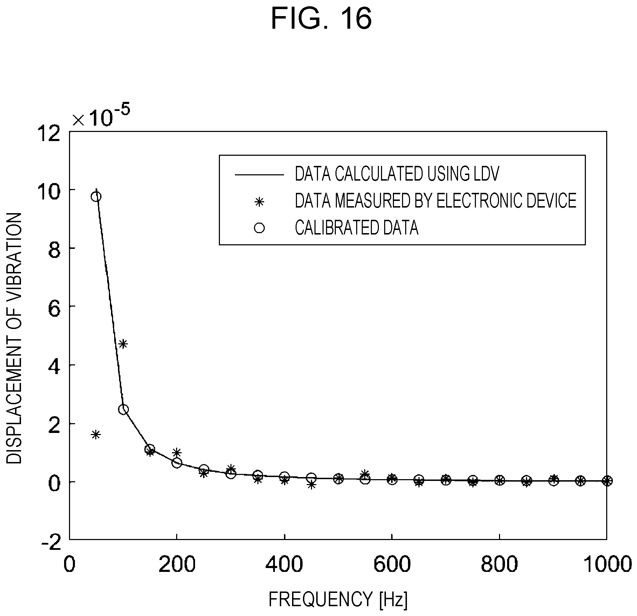

The following describes a result of calibration performed by the electronic device 1 according to an embodiment. FIG. 16 is a graph illustrating an example of a result of calibration performed by the electronic device 1 according to an embodiment. In FIG. 16, the horizontal axis represents frequency and the vertical axis represents the displacement of vibration.

In FIG. 16, the voltage value is fixed and the frequency characteristics, averaged across the entire surface, of the vibration displacement are plotted for the vibrating body, which is a loudspeaker. In an embodiment, the value of the vibration displacement that the electronic device 1 (millimeter-wave sensor) outputs may be calibrated by acquiring a calibration value of the response of the electronic device 1 (millimeter-wave sensor) with respect to a reference vibrating body that serves as a reference.

The solid line illustrated in FIG. 16 represents an average value of the vibration displacement calculated using a reference instrument (LDV) for the reference vibrating body. The asterisk (*) plots illustrated in FIG. 16 represent (pre-calibration) raw data of measurement results from the electronic device 1 (millimeter-wave sensor). The circle (∘) plots illustrated in FIG. 16 represent the results of calibrating the raw data of the measurement results from the electronic device 1 (millimeter-wave sensor). As illustrated in FIG. 16, the post-calibration data (∘) approaches the graph (solid line) of the reference, demonstrating that calibration is being executed appropriately.

As described above, a method of controlling the electronic device 1 uses calibration information stored in a storage unit (calibration coefficient memory 14) to measure vibration of a target (vibrating body 200) on the basis of an electromagnetic wave reflected from the target. The method of controlling the electronic device 1 includes a calibrating step for calibrating a measurement result from the electronic device 1 on the basis of a result obtained by measuring vibration of a reference vibrating body.

The above calibrating step may calibrate a measurement result from the electronic device 1 on the basis of a result obtained by having another vibrometer (for example, an LDV) different from the electronic device 1 measure vibration of the reference vibrating body.

The above calibration step may include
a first calculating step for calculating, by numerical analysis, a ratio of a displacement frequency response of a specific point on the reference vibrating body to a position-average frequency response averaged at the position of the displacement frequency response,
a measuring step for using a reference inspection device (for example, an LDV) to perform measurement of specific-point vibration, which is vibration at a specific measurement point on the reference vibrating body, and
a second calculating step for calculating a reference of the average vibration displacement of the reference vibrating body on the basis of the above ratio and the above specific-point vibration.

The above calibrating step may calibrate a measurement result from the electronic device 1 on the basis of the reference of the average vibration displacement and a characteristic displacement frequency response of the reference vibrating body measured by the electronic device 1.

The embodiment described above may also be carried out as program causing processing to be executed by an electronic device that measures vibration of a target on the basis of an electromagnetic wave reflected from the target by using calibration information stored in a storage unit. In this case, the program may cause the electronic device to execute a calibrating step for calibrating a measurement result from the electronic device on the basis of a result obtained by measuring vibration of a reference vibrating body.

The embodiment described above may also be carried out as the electronic device 1 according to an embodiment. In this case, the electronic device 1 may be provided with the signal processing unit 10 and the correction processing unit 13. The signal processing unit 10 uses calibration information stored in a storage unit (calibration coefficient memory 14) to measure vibration of a target on the basis of an electromagnetic wave reflected from the target. The correction processing unit 13 calibrates a measurement result from the electronic device 1 on the basis of a result obtained by measuring vibration of a reference vibrating body.

The electronic device 1 according to an embodiment and the method of calibrating the electronic device 1 according to an embodiment make it possible to calibrate a millimeter-wave sensor by using another sensor capable of detecting vibration more accurately. Consequently, the electronic device 1 according to an embodiment and the method of calibrating the electronic device 1 according to an embodiment make it possible to detect vibration of a vibrating body with good precision by transmitting and receiving waves, such as millimeter waves for example.. Consequently, the electronic device 1 according to an embodiment and the method of calibrating the electronic device 1 according to an embodiment can be expected to be useful in a wide variety of fields.

### (Other embodiments)

The following describes other embodiments.

The embodiment illustrated in FIG. 10 describes an example of measuring vibration by using the vibrating body 200, which is an electrodynamic loudspeaker, as the reference vibrating body. However, in an embodiment, the vibrating body 200 to be used as the reference vibrating body may also be a piezoelectric or an electrostatic loudspeaker, and a vibrating body based on some other principle may also be used.

The embodiment described above describes an example in which the vibrometer to be used as the reference is an LDV. However, in an embodiment, the vibrometer to be used as the reference may also be a contact-type acceleration sensor, for example.

The operations in FIGs. 14 and 15 are described under the assumption that the data of each frequency is changed discretely in steps. However, in an embodiment, processing and measurement may also be performed by performing a frequency sweep to change the frequency continuously.

The embodiment illustrated in FIG. 10 describes an example of measuring vibration by using the vibrating body 200, which is an electrodynamic loudspeaker, as the reference vibrating body. However, in an embodiment, a vibrating body formed by a piezoelectric element and a metal plate may also be used as the reference vibrating body.

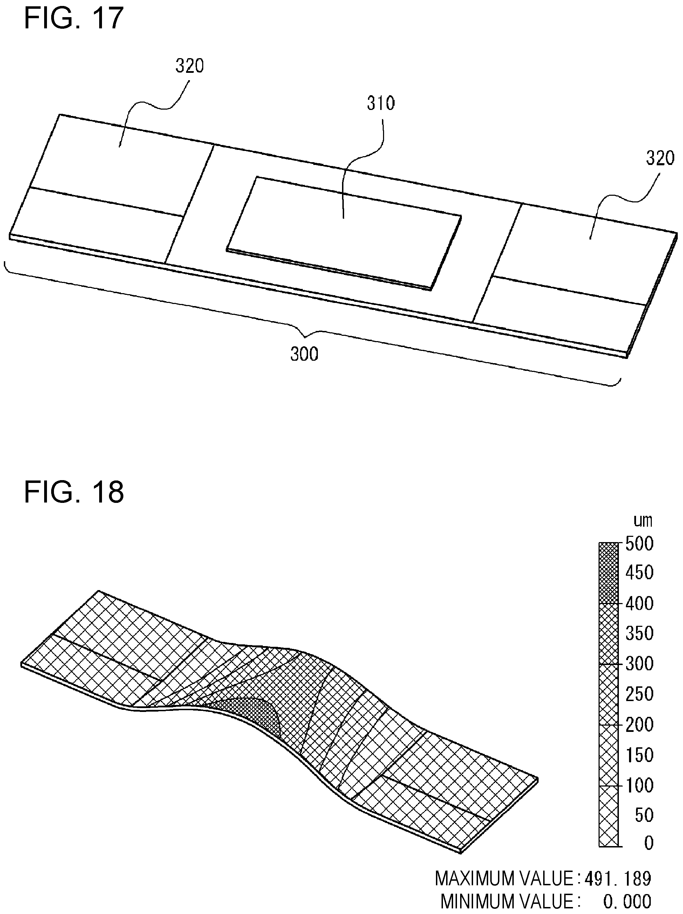

FIG. 17 schematically illustrates the outward appearance of a vibrating body formed by a piezoelectric element and a metal plate. As illustrated in FIG. 17, a vibrating body 300 may be provided with a piezoelectric element 310. As illustrated in FIG. 17, the vibrating body 300 may be provided with fixed ends 320 at both ends to form a double-anchored beam. FIG. 18 illustrates the state (vibration displacement) of the vibration amplitude of the vibrating body 300 at 710 Hz. As other examples of a vibrating body serving as a reference vibrating body that is usable in an embodiment, a vibrating body having a cantilever structure, a double-overhanging structure, or other structure may also be used. As other examples of a vibrating body serving as a reference vibrating body that is usable in an embodiment, a piezoelectric element and a vibrating body formed from aluminum or another metal, plastic, ceramic, wood, some other material, or a combination of the above may also be used. As for the resonant frequency of a vibrating body serving as a reference vibrating body that is usable in an embodiment, a vibrating body having a primary resonant frequency and a secondary resonant frequency can be used. In the present disclosure, a vibrating body serving as a reference vibrating body that is usable in an embodiment may also have tertiary or more resonant frequencies.

The method of calibrating according to an embodiment is usable in a process for manufacturing the electronic device 1 (millimeter-wave sensor), for example. The method of calibrating according to an embodiment can be applied after the manufacture of a millimeter-wave sensor board (such as an antenna board or an electronic circuit on which an LSI chip is mounted) or after the completion of the final assembly of the millimeter-wave sensor in the process for manufacturing the electronic device 1 (millimeter-wave sensor), for example. In this case, in an embodiment, the calibration coefficient (correction value) c_{calib}(fᵢ) may be written to a non-volatile memory in the electronic device 1 (millimeter-wave sensor), the external device 60 (FIG. 2) to which the electronic device 1 (millimeter-wave sensor) is to be connected, and/or the like. The electronic device 1 according to an embodiment or the method of controlling the electronic device 1 according to an embodiment may also be carried out as a method of manufacturing the electronic device 1 in which the method of calibrating described above is incorporated into a production process, for example.

The present disclosure has been described on the basis of the drawings and examples, but note that a person skilled in the art could easily make various variations or revisions on the basis of the present disclosure. Consequently, it should be understood that these variations or revisions are included in the scope of the present disclosure. For example, the functions and the like included in each functional unit may be rearranged in logically non-contradictory ways. Multiple functional units or the like may be combined into one, or a functional unit may be divided. Each embodiment according to the present disclosure described above is not limited to being carried out exactly according to each embodiment as described, and may be carried out by combining features or omitting some features, as appropriate. In other words, the content of the present disclosure enables a person skilled in the art to make various variations and revisions on the basis of the present disclosure. Therefore, these variations and revisions are included in the scope of the present disclosure. For example, in each embodiment, each functional unit, means, step, and the like can be added to another embodiment or replaced by each functional unit, means, step, and the like of another embodiment in logically non-contradictory ways. In each embodiment, multiple functional units, means, steps, and the like can be combined into one, or each functional unit, means, step, and the like can be divided. Each embodiment according to the present disclosure described above is not limited to being carried out exactly according to each embodiment as described, and can be carried out by combining features or omitting some features, as appropriate.

The embodiments described above are not limited solely to embodiments of the electronic device 1. For example, the embodiments described above may also be carried out as a method of controlling a device like the electronic device 1. Furthermore, the embodiments described above may also be carried out as a program to be executed by a device like the electronic device 1, for example, or as a storage medium or recording medium in which the program is recorded.

In the embodiments described above, the electronic device 1 is described as including components such as the transmitting antenna array 24 and the receiving antenna array 31 that form what is called a radar sensor. However, in an embodiment, the electronic device may be carried out as a configuration like the signal processing unit 10, for example. In this case, the signal processing unit 10 may be carried out as a unit having functions for processing signals handled by the transmitting antenna array 24, the receiving antenna array 31, and the like.

### REFERENCE SIGNS

- 1: electronic device
- 10: signal processing unit
- 11: signal generation processing unit
- 12: received signal processing unit
- 13: correction processing unit
- 14: calibration coefficient (correction value) memory
- 14: waveform analysis processing unit
- 21: transmission DAC
- 22: transmission circuit
- 23: millimeter-wave transmission circuit
- 24: transmitting antenna array
- 31: receiving antenna array
- 32: mixer
- 33: reception circuit
- 34: reception ADC
- 50: communication interface
- 60: external device

## Claims

1. A method of controlling an electronic device configured to measure vibration of a target on the basis of an electromagnetic wave reflected from the target by using calibration information stored in a storage unit, the method comprising:
a calibrating step for calibrating a measurement result from the electronic device on the basis of a result obtained by measuring vibration of a reference vibrating body.

2. The method of controlling according to claim 1, wherein the calibrating step calibrates a measurement result from the electronic device on the basis of a result obtained by having another vibrometer different from the electronic device measure vibration of the reference vibrating body.

3. The method of controlling according to claim 1, wherein the calibrating step includes
a first calculating step for calculating, by numerical analysis, a ratio of a displacement frequency response of a specific point on the reference vibrating body to a position-average frequency response averaged at the position of the displacement frequency response,
a measuring step for using a reference inspection device to perform measurement of specific-point vibration, which is vibration at a specific measurement point on the reference vibrating body, and
a second calculating step for calculating a reference of the average vibration displacement of the reference vibrating body on the basis of the ratio and the specific-point vibration.

4. The method of controlling according to claim 2, wherein the calibrating step calibrates a measurement result from the electronic device on the basis of the reference of the average vibration displacement and a characteristic displacement frequency response of the reference vibrating body measured by the electronic device.

5. A program causing an electronic device configured to measure vibration of a target on the basis of an electromagnetic wave reflected from the target by using calibration information stored in a storage unit to execute:
a calibrating step for calibrating a measurement result from the electronic device on the basis of a result obtained by measuring vibration of a reference vibrating body.

6. An electronic device comprising:
a signal processing unit configured to measure vibration of a target on the basis of an electromagnetic wave reflected from the target by using calibration information stored in a storage unit; and
a correction processing unit configured to calibrate a measurement result from the electronic device on the basis of a result obtained by measuring vibration of a reference vibrating body.

## Amended claims

### Amended claims under Art. 19.1 PCT

1. A method of controlling an electronic device configured to measure vibration of a target on the basis of an electromagnetic wave reflected from the target by using calibration information stored in a storage unit, the method comprising:
a calibrating step for calibrating a measurement result from the electronic device on the basis of a result obtained by measuring vibration of a reference vibrating body.

2. The method of controlling according to claim 1, wherein the calibrating step calibrates a measurement result from the electronic device on the basis of a result obtained by having another vibrometer different from the electronic device measure vibration of the reference vibrating body.

3. The method of controlling according to claim 1 or 2, wherein the calibrating step includes
a first calculating step for calculating, by numerical analysis, a ratio of a displacement frequency response of a specific point on the reference vibrating body to a position-average frequency response averaged at the position of the displacement frequency response,
a measuring step for using a reference inspection device to perform measurement of specific-point vibration, which is vibration at a specific measurement point on the reference vibrating body, and
a second calculating step for calculating a reference of the average vibration displacement of the reference vibrating body on the basis of the ratio and the specific-point vibration.

4. The method of controlling according to claim 2 or 3, wherein the calibrating step calibrates a measurement result from the electronic device on the basis of the reference of the average vibration displacement and a characteristic displacement frequency response of the reference vibrating body measured by the electronic device.

5. A program causing an electronic device configured to measure vibration of a target on the basis of an electromagnetic wave reflected from the target by using calibration information stored in a storage unit to execute:
a calibrating step for calibrating a measurement result from the electronic device on the basis of a result obtained by measuring vibration of a reference vibrating body.

6. An electronic device comprising:
a signal processing unit configured to measure vibration of a target on the basis of an electromagnetic wave reflected from the target by using calibration information stored in a storage unit; and
a correction processing unit configured to calibrate a measurement result from the electronic device on the basis of a result obtained by measuring vibration of a reference vibrating body.
